# EUROPÄISCHE PATENTSCHRIFT

(11) **EP 0 342 606 B1**
(45) Veröffentlichungstag und Bekanntmachung des Hinweises auf die Patenterteilung: **22.06.1994**
(21) Anmeldenummer: 89108779.3
(22) Anmeldetag: 16.05.1989
(51) Int. Cl.: H02K 21/00, H02K 29/00, H02K 23/16

(54) **Elektrische Maschine**
Electric machine
Machine électrique

(30) Priorität: 16.05.1988 DE 3816651
(43) Veröffentlichungstag der Anmeldung: 23.11.1989
(73) Patentinhaber: Magnet-Motor Gesellschaft für magnetmotorische Technik mbH, D-82319 Starnberg (DE)
(72) Erfinder: Heidelberg, Götz, Dipl.-Phys., D-8136 Starnberg-Percha (DE); Gründl, Andreas, Dr., D-8000 München 70 (DE); Ehrhart, Peter, Dr., D-8000 München 70 (DE)
(74) Vertreter: Klunker . Schmitt-Nilson . Hirsch

(56) Entgegenhaltungen:
- EP-A- 0 058 025
- DE-A- 2 319 184
- DE-A- 3 317 553
- DE-A- 3 427 103
- GB-A- 2 056 725
- US-A- 4 110 649
- US-A- 4 371 801
- US-A- 4 578 609
- PATENT ABSTRACTS OF JAPAN vol. 11, no. 77 (E-487)(2524) 07 März 1987, JP-A-61 231857 (SAWAFUJI ELECTRIC CO.) 16 Oktober 1986,

## Beschreibung

Die Erfindung bezieht sich auf eine elektrische Maschine mit einem dauermagnetischen Erregerteil und einem mit Stromleitern ausgestatteten Induktionsteil, die relativ zueinander bewegbar sind, insbesondere eine mittels elektronischer Bauelemente kommutierte elektrische Maschine.

Derartige elektrische Maschinen, die bekannt sind, lassen sich vorstellungsmäßig am leichtesten erfassen unter Heranziehung des Vergleichsbilds eines mechanisch oder elektronisch kommutierten Gleichsommotors mit dauermagnetischer Erregung, wiewohl die erfindungsgemäße Maschine diesem Vergleichbild keineswegs unbedingt vollständig oder weitgehend entsprechen muß. Herkömmliche Maschinen dieser Art haben eine M-n-Kennlinie (M bedeutet Drehmoment, und n bedeutet Drehzahl), die besondes ausgeprägt zumindest ab einem bestimmten Drehzahlbereich - mit zunehmender Drehzahl abfällt. Dies hat hauptsächlich seine Ursache darin, daß mit zunehmender Drehzahl die in der Maschine induzierte EMK zunimmt und daß infolgedessen nur noch geringerer Strom gegen diese EMK in die Maschine "gedrückt" werden kann. Der geschilderte, grundsätzliche Zusammenhang gilt auch für elektronisch kommutierte Maschinen, bei denen man zwar die elektronische Kommutierung so steuern kann, daß bis zu einem bestimmten Drehzahlbereich der durch die Maschine fliessende Strom auf etwa gleicher Höhe gehalten wird; oberhalb dieses Drehzahlbereichs nimmt dann jedoch der Maschinenstrom rapide ab.

Der Erfindung liegt die Aufgabe zugrunde, eine elektrische Maschine mit Steuerbarkeit der Größe des abgegebenen Drehmoments, mindestens großenteils losgelöst von der herkömmlichen Drehzahlabhängigkeit, verfügbar zu machen.

Mehrere Lösungen dieser Aufgabe werden durch die Erfindung verfügbar gemacht.

Gegenstand einer ersten Lösung (Anspruch 1) ist eine elektrische Maschine mit einem Läufer, der ein dauermagnetisches Erregerteil der Maschine aufweist, und einem Stator, der ein mit Stromleitern ausgestattetes Induktionsteil der Maschine aufweist, wobei der Läufer relativ zu dem Stator bewegbar ist und wobei zur gezielten Veränderung der bei laufender Maschine im Induktionsteil induzierten Spannung durch Einstellung der Phasenlage der in zwei Teilbereichen des Induktionsteils induzierten Spannungen ein erster, mit Stromleitern ausgestatteter Teilbereich des Induktionsteils relativ zu einem zweiten, mit Stromleitern ausgestatteten Teilbereich des Induktionsteils körperlich in Relativbewegungsrichtung von Läufer und Stator verstellbar ist, dadurch gekennzeichnet, daß die Maschine eine mittels elektronischer Bauelemente kommutierte, elektrische Maschine ist, bei der ein Sensor zur Erfassung der momentanen Bewegungs-Relativstellung von Läufer und Stator dem zweiten, stationären Teilbereich des Induktionsteils zugeordnet ist.

Im Vergleich hierzu ist in dem Dokument US-A-4 371 801 eine elektrische Maschine offenbart, die zwar relativ zueinander verdrehbare Teilbereiche des Induktionsteils aufweist, aber keine elektronische kommutierte, mit einem Sensor zur Drehstellungserfassung des Läufers ausgestattete Maschine ist. Die Dokumente DE-A-33 17 553 und US-A-4 110 649 zeigen elektrische Maschinen, bei denen Teilbereiche des dauermagnetischen Erregerteils relativ zueinander verstellbar sind.

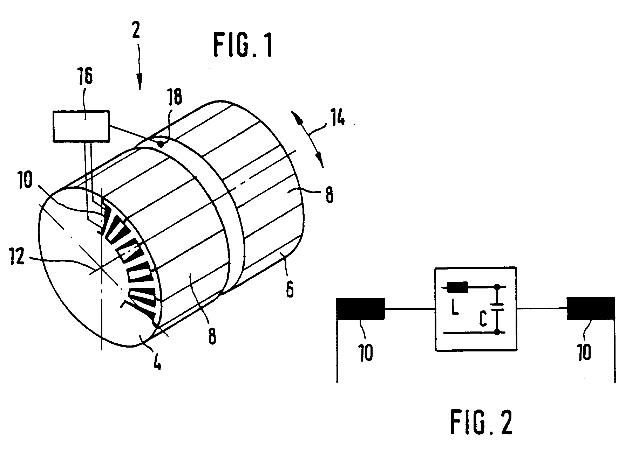

Gegenstand einer zweiten Lösung (Anspruch 3) ist eine elektrische Maschine mit einem dauermagnetischen Erregerteil und einem mit Stromleitern ausgestatteten Induktionsteil, die relativ zueinander bewegbar sind, dadurch gekennzeichnet, daß zur gezielten Veränderung der bei laufender Maschine im Induktionsteil induzierten Spannung durch Einstellung der Phasenlage der in zwei Teilbereichen des Induktionsteils induzierten Spannungen ein elektrischer Phasenschieber zwischen den beiden Teilbereichen des Induktionsteils zwischengeschaltet ist (Fig. 2).

Im Vergleich hierzu ist in dem Dokument DE-A-34 27 103 eine elektrische Maschine offenbart, bei der der rotierende Erregerteil axial verlängert ist und dort mit einer stationären, dem Maschinengehäuse zugeordneten Zusatzwicklung zusammenwirkt. Es wird dadurch ein Teil des Dauermagnetflusses abgezweigt, und der in der Zusatzwicklung induzierte Strom wird auf ein LC-Glied geschaltet. Hierdurch ergibt sich nicht eine unterschiedliche Phasenlage von in zwei Teilbereichen des Induktionsteils induzierten Spannungen.

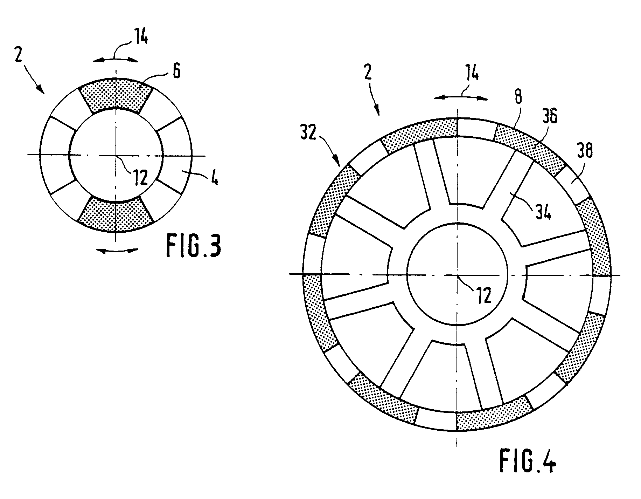

Gegenstand einer dritten Lösung (Anspruch 5) ist eine elektrische Maschine mit einem dauermagnetischen Erregerteil und einem mit Stromleitern ausgestatteten Induktionsteil, die in einer Relativbewegungsrichtung relativ zueinander bewegbar sind, dadurch gekennzeichnet, daß zur gezielten Veränderung der bei laufender Maschine im Induktionsteil induzierten Spannung durch Einstellung der Größe des effektiven dauermagnetischen Flusses in der Maschine ein dem Erregerteil zugewandter Polkopf-Bestandteil des Induktionsteils relativ zu dem restlichen Induktionsteil körperlich verdrehbar oder - bei Linearmaschinen - in der genannten Relativbewegungsrichtung verstellbar ist (Fig. 4).

Im Vergleich hierzu ist in dem Dokument US-A-4 578 609 eine rotatorische elektrische Maschine offenbart, bei der Eisenteile im magnetischen Rückschlußweg auf der dem Erregerteil abgewandten Seite des Induktionsteils in Axialrichtung verstellbar sind, nicht jedoch ein dem Erregerteil zugewandter Polkopf-Bestandteil des Induktionsteils in der Relativbewegungsrichtung von Induktionsteil und Erregerteil.

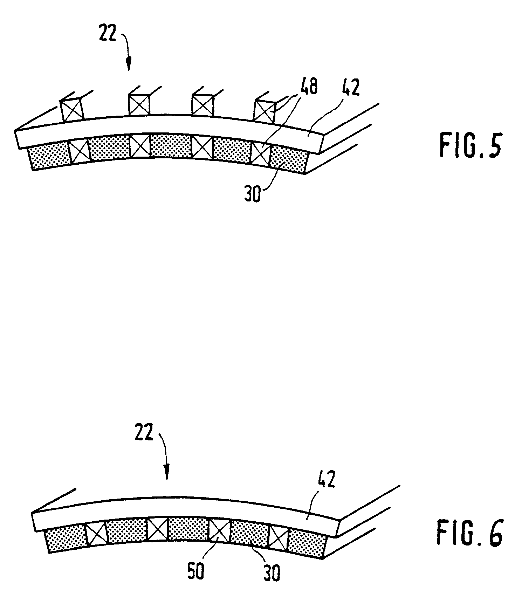

Gegenstand einer vierten Lösung (Anspruch 7) ist eine elektrische Maschine mit einem dauermagnetischen Erregerteil und einem mit Stromleitern ausgestatteten Induktionsteil, die relativ zueinander bewegbar sind, dadurch gekennzeichnet, daß zur gezielten Veränderung der bei laufender Maschine im Induktionsteil induzierten Spannung durch Einstellung der Größe des effektiven dauermagnetischen Flusses in der Maschine Hilfswicklungen am Erregerteil vorgesehen sind, die dem Flußweg zwischen benachbarten Dauermagneten zugeordnet sind, zum Überlagern eines elektrisch induzierten Magnetflusses, um den dauermagnetischen Fluß im Erregerteil abzuschwächen und/oder zu verstärken (Fig. 5).

Im Vergleich hierzu ist in dem Dokument DE-A-34 27 103 eine elektrische Maschine offenbart, bei der der rotierende Erregerteil axial verlängert ist und dort mit einer stationären, dem Maschinengehäuse zugeordneten Zusatzwicklung zusammenwirkt. Es wird dadurch ein Teil des Dauermagnetflusses abgezweigt, und der in der Zusatzwicklung induzierte Strom wird Schaltungsgliedern zugeleitet. Die Zusatzwicklung befindet sich nicht am Erregerteil im Flußweg zwischen benachbarten Dauermagneten. - Das Schwächen und Verstärken von Dauermagnetflüssen in elektrischen Maschinen durch Hilfswicklungen ist prinzipiell aus dem Dokument DE-A-23 19 184 bekannt.

Gegenstand einer fünften Lösung (Anspruch 8) ist eine elektrische Maschine mit einem dauermagnetischen Erregerteil und einem mit Stromleitern ausgestatteten Induktionsteil, die relativ zueinander bewegbar sind, dadurch gekennzeichnet, daß zur gezielten Veränderung der bei laufender Maschine im Induktionsteil induzierten Spannung durch Einstellung der Größe des effektiven dauermagnetischen Flusses in der Maschine eine Einrichtung zum Erhöhen und/oder Erniedrigen der dauermagnetischen Magnetisierung der Dauermagnete des Erregerteils vorgesehen ist, wobei die Einrichtung Stromleiter, Elektromagnete oder Temperaturänderungsmittel zum Aufmagnetisieren oder, gegebenenfalls teilweisen, Entmagnetisieren der Dauermagnete des Erregerteils aufweist (Fig. 6).

Im Vergleich hierzu ist in dem Dokument JP-A-61-231 857 eine elektrische Maschine offenbart, bei der auf dem Kern des Induktionsteils eine zusätzliche Wicklung vorhanden ist, um den Kern in die magnetische Sättigung zu bringen. Aus dem Dokument DE-A-34 27 103 ist eine elektrische Maschine bekannt, bei der der rotierende Erregerteil axial verlängert ist und dort mit einer stationären, dem Maschinengehäuse zugeordneten Zusatzwicklung zusammenwirkt. Es wird dadurch ein Teil des Dauermagnetflusses abgezweigt, und der in der Zusatzwicklung induzierte Strom wird Schaltungsgliedern zugeleitet. Bei beiden bekannten Maschinen ergibt sich keine Änderung der Dauermagnetisierung der Dauermagnete.

Bei den erfindungsgemäßen Maschinen läßt sich gewünschtenfalls insbesondere erreichen, daß die Leistung P = M x n der Maschine - mindestens ab einem bestimmten Drehzahlbereich - mindestens im großen und ganzen über der Drehzahl konstant bleibt. Ferner läßt sich insbesondere erreichen, daß das Drehmoment erst bei höherer Drehzahl stark abfällt, so daß höhere Drehzahlen nutzbar sind.

Bei der ersten und der zweiten Lösung wird also auf die Größe der bei laufender Maschine induzierten EMK Einfluß genommen, insbesondere bei zunehmender Drehzahl eine Verringerung der EMK eingestellt, so daß höherer Strom als ohne diese Maßnahme in der Maschine gewendet werden kann. Die dritte, vierte und fünfte Lösung wirken sich in analoger Weise als Einstellung der induzierten EMK aus, weil die Größe der induzierten EMK unmittelbar von dem aufgrund der Dauermagnete fliessenden, magnetischen Fluß abhängt; höherer Dauermagnetfluß bedeutet - gleiche Drehzahl vorausgesetzt - größere EMK und umgekehrt. Das Adjektiv "effektiv" wurde hinzugesetzt, um anzugeben, daß es auf die jeweils im Bereich der Stromleiter bzw. Spulen herrschenden, von den Dauermagneten stammenden Magnetflüsse ankommt; an einzelnen Stellen der Magnetkreise, beispielsweise an den Dauermagneten selbst, können höhere Magnetflüsse herrschen.

Es wird darauf hingewiesen, daß es sich bei der erfindungsgemäßen, elektrischen Maschine nicht unbedingt um einen Motor handeln muß, der elektrische Leistung aufnimmt und mechanische Leistung abgibt, sondern sich auch um einen Generator handeln kann, der mechanische Leistung aufnimmt und elektrische Leistung abgibt. Im Fall des Generators kann man durch Steuerung der abgegebenen elektrischen Leistung die vom Generator bei gegebener Drehzahl aufgenommene, mechanische Leistung steuern.

Es wird ferner darauf hingewiesen, daß die erfindungsgemäße, elektrische Maschine nicht eine rotierende Maschine sein muß, sondern auch eine lineare Maschine sein kann. Die nachfolgend beschriebenen, konkreteren Ausgestaltungsmöglichkeiten der Erfindung lassen sich sowohl bei rotierenden Motoren bzw. Generatoren als auch in analoger Weise bei linearen Motoren oder Generatoren verwirklichen. Schließlich wird darauf hingewiesen, daß bei der erfindungsgemäßen, elektrischen Maschine wahlweise entweder das Induktionsteil dem Stator und das Erregerteil dem Rotor zugeordnet sein können oder umgekehrt. Auch die Möglichkeit, daß sowohl das Induktionsteil als auch das Erregerteil sich bewegen, aber mit einer Relativgeschwindigkeit, ist ausführbar. In den meisten Fällen wird es allerdings günstiger sein, das mit Stromleitern ausgestattete Induktionsteil dem Stator der Maschine zuzuordnen, weil sich in diesem Fall die Stromzuführung bzw. - bei einem Generator - die Stromabführung einfacher gestaltet. - Der Rotor der Maschine kann ein sogenannter Innenrotor sein, der ringförmig von dem Stator umgeben ist. Der Rotor kann aber auch ein sogenannter Außenrotor sein, der ringförmig gestaltet ist und den Stator radial außen umgibt. Schließlich ist es möglich, daß der Rotor axial neben dem Stator angeordnet ist, also die sogenannte Wirkfläche der Maschine in einer rechtwinklig zur Drehachse verlaufenden Ebene liegt und nicht zylindrisch ist, wie bei den zuvor geschilderten Bauarten.

Es versteht sich, daß das Erregerteil und das Induktionsteil sich unter Freilassung eines Luftspalts gegenüberliegen.

Vorzugsweise finden hochkoerzitive Dauermagnete, beispielsweise auf der Basis seltener Erden mit Kobalt oder Eisen, wie Sm-Co-Magnete oder Fe-Nd-Magnete Verwendung.

Am meisten bevorzugt sind Ausführungsformen der erfindungsgemäßen, elektrischen Maschine als Rotationsmotoren, vorzugsweise mit Außenrotor und/oder mit elektronischer Kommutierung.

Bei der weiter vorn angesprochenen ersten Lösung sind die Teilbereiche des Induktionsteils vorzugsweise quer zur Relativbewegungsrichtung nebeneinander angeordnet. Bei rotierenden Maschinen läuft dies auf eine Verdrehbarkeit der beiden Teilbereiche gegeneinander um die Rotationsachse der Maschine hinaus. Es besteht eine einstellbare Phasendifferenz zwischen den beiden Teilen der GesamtEMK. Eine vorzeichenberücksichtigende Addition der beiden Teil-EMK führt zu jedem Zeitpunkt zu einer Gesamt-EMK, die - außer bei nicht verstellten Induktionsteilen - kleiner ist als es die EMK ohne die beschriebene Unterteilung des Induktionsteils wäre, weil die Spitzenwerte der Teil-EMK zeitlich nicht zusammenfallen.

Bei der weiter vorn angesprochenen dritten Lösung führt die Verdrehung bzw. Verstellung des Polkopf-Betandteils des Induktionsteils dazu, daß die Flußbedingungen für die von den Dauermagneten ausgehenden Magnetflüsse verbessert oder verschlechtert werden, indem dem gesamten oder einem größeren oder einem kleineren Teil des Magnetflusses ein optimaler Flußweg durch magnetisch leitendes Material geboten wird, während für den restlichen Teil des Magnetflusses wesentlich verschlechterte oder praktisch unterbrochene Flußbedindungen herrschen. Es können aber auch Kurzschlußwege für den Magnetfluß geschaffen werden, was dazu führt, daS weniger Magnetfluß durch die Stromleiter- bzw. Spulenbereiche fließt. Die resultierende Verringerung des effektiven, sich im Bereich der Stromleiter oder Stromspulen auswirkenden, dauermagnetischen Flusses führt zu einer Verringerung der in der Maschine induzierten EMK.

Eine weitere bevorzugte Möglichkeit zur Abschwächung und/oder Verstärkung des effektiven Flusses im Erregerteil besteht darin, im Erregerteil Hilfswicklungen vorzusehen, mittels derer der von den Dauermagneten stammende Magnetfluß abgeschwächt oder verstärkt werden kann.

Bei der weiter vorn angesprochenen fünften Lösung sind Stromleiter bzw. Elektromagnete ausreichender Feldstärke oder Temperaturänderungsmittel vorgesehen, mit denen sich ein Teil der Dauermagnete oder alle Dauermagnete des Erregerteils stärker aufmagnetisieren oder teilweise entmagnetisieren lassen.

Wenn weiter vorn davon gesprochen worden ist, daß ein erster und ein zweiter Teilbereich des Induktionsteils relativ zueinander verdrehbar sind, dann versteht sich, daß die Maschine insgesamt auch mehr als zwei Teilbereiche aufweisen kann, beispielsweise zwei unverstellbare Teilbereiche und einen mittleren, verstellbaren Teilbereich. Die vorstehend beschriebenen Verstellungen bzw. Flußänderungen können gewünschtenfalls auch selbsttätig abhängig von der Drehzahl der Maschine vorgenommen sein, wobei konkret auf die Möglichkeit einer selbsttätigen Verstellung aufgrund der Fliehkraft hingewiesen wird. In den meisten Fällen wird man jedoch bevorzugen, diese Verstellungen bzw. Änderungen durch bewußt steuernde Eingriffe und nicht rein selbsttätig vorzunehmen. Ferner wird darauf hingewiesen, daß eine Reihe von Ausführungsformen der Erfindung es zulassen, das Drehmoment bzw. die Gesamt-EMK auf Null einzustellen. Dies ist besonders anschaulich vorstellbar bei Ausführungsformen rotierender Maschinen, bei denen ein erster und ein zweiter Teilbereich des Induktionsteils relativ zueinander verdrehbar sind. Wenn man hierbei den zweiten Teilbereich um einen Dauermagnetpol-Mittenabstand gegenüber dem ersten Teilbereich verdreht, wird in einem Teil der Maschine eine EMK in einer ersten Richtung und in einem anderen Teil der Maschine eine gleich große EMK in der entgegengesetzten Richtung, vorausgesetzt gleich große Maschinenteile, induziert.

Bei einem Teil der Ausführungsformen der Erfindung, insbesondere denjenigen, die mit Relativverstellung von erstem und zweitem Teilbereich des Induktionsteils arbeiten, wird die Auslegung am sinnvollsten so getroffen, daß einander zugeordnete Spulenpaare im Induktionsteil in Reihe geschaltet sind, so daß sich die in diesen Spulen induzierten EMK's vorzeichenberücksichtigend addieren. Außerdem sorgt man günstigerweise dafür, daß die Zeitpunkte der Stromwendung in den Stromleitern des Induktionsteils der Verstellsituation angepaßt sind, weil der Nulldurchgang der Gesamt-EMK wegen der Addition zu einem anderen Zeitpunkt als vor der Verstellung liegt.

Elektromotoren mit elektronischer Kommutierung sind an sich bekannt, so daß weitere Einzelheiten hierzu nicht gesondert beschrieben werden müssen. Beispielhaft wird auf die EP-PS 94 978 verwiesen.

Vorzugsweise ist die erfindungsgemäße Maschine in multipler Bauweise ausgeführt. Dies bedeutet, daß die Maschine insbesondere hinsichtlich der Spulen des Induktionsteils und/oder hinsichtlich der Steller für die elektronische Kommutierung und/oder hinsichtlich der Sensoren für die elektronische Kommutierung baukastenartig mit einer Mehrzahl von untereinander gleichen Großserienteilen aufgebaut ist. Ein multipler Aufbau kann auch dadurch verwirklicht werden, daß autarke Teilkombinationen von Spulen, Stellern und Sensoren für sich funktionstüchtig sind, also die Maschine sozusagen aus mehreren autarken Teilmaschinen aufgebaut ist. Der Ausfall einzelner Teilmaschinen zieht dann nicht den Ausfall der Gesamtmaschine nach sich.

Die Erfindung und Weiterbildungen der Erfindungen werden im folgenden anhand von zeichnerisch schematisiert dargestellten, bevorzugten Ausführungsbeispielen noch näher erläutert. Es zeigt:
- Fig. 1: das aus zwei Teilbereichen bestehende Induktionsteil einer Rotationsmaschine in perspektivischer Darstellung;
- Fig. 2: eine Prinzipdarstellung der elektrischen Phasenverschiebung zwischen zwei Spulen des Induktionsteils einer Maschine;
- Fig. 3: das zwei Teilbereiche aufweisende Induktionsteil einer Rotationsmaschine im Querschnitt;
- Fig. 4: das Induktionsteil einer Rotationsmaschine mit verdrehbarem Polkopfring im Querschitt;
- Fig. 5: das Erregerteil einer Rotationsmaschnie mit Hilfswicklung zur Beeinflussung des dauermagnetischen Flusses in fragmentarischer, perspektivischer Darstellung;
- Fig. 6: das Erregerteil einer Rotationsmaschine mit Hilfswicklung zur Änderung der Magnetisierung der Dauermagnete in fragmentarischer, perspektivischer Darstellung;

Das in Fig. 1 dargestellte, im wesentlichen zylindrische Induktionsteil 2 einer elektrischen Maschine (Motor oder Generator) besteht aus zwei axial aneinander anschließenden Teilbereichen 4, 6. Jeder Teilbereich 4, 6 weist umfangsmäßig verteilt zwanzig Pole 8, jeweils versehen mit einer Spule 10, auf. Die beiden Teilbereiche 4, 6 sind untereinander zumindest im wesentlichen gleich aufgebaut.

Um das gezeichnete Induktionsteil konzentrisch herum ist ein hohlzylindrisches, nicht eingezeichnetes Erregerteil angeordnet, das an seinem Innenumfang mit umfangsmäßig verteilten Dauermagneten wechselnder Polung versehen ist. Das Erregerteil ist nicht in zwei gegeneinander verdrehbare Teilbereiche unterteilt. Das Erregerteil ist um die Längs-Mittelachse 12 des Induktionsteils 2 drehbar gelagert.

Der in Fig. 1 hintere Teilbereich 6 des Induktionsteils 2 ist durch mechanische, hydraulische, pneumatische oder elektrische Einrichtungen relativ zu dem anderen Teilbereich 4 in einer oder beiden Richtungen verdrehbar, vgl. Pfeil 14, und zwar in einem Ausmaß, das der Umfangslänge eines Pols 8 entspricht. Jeweils diejenigen beiden Spulen 10, die bei der Nullstellung des Teilbereichs 6, also nicht vorgenommener Verdrehung des Teilbereichs 6 gegenüber dem feststehenden Teilbereich 4, axial miteinander fluchten, sind miteinander elektrisch in Reihe geschaltet.

Mit 16 ist eine elektronische Kommutierungseinrichtung angedeutet. Die Kommutierungseinrichtung 16 erhält durch einen am Induktionsteil angeordneten Sensor 18 laufend Information über die momentane Dreh-Relativstellung von Erregerteil und Induktionsteil 4. Aufgrund dieser Information werden die Spulen 10 des Induktionsteils 4 jeweils zu der für die Drehmomenterzeugung geeigneten Zeit umgepolt. Die Kommutierungseinrichtung 16 kann einzelne, mehrere oder auch alle Spulen 10 der Maschine schalten. Wenn die gezeichnete Kommutierungseinrichtung 16 nicht alle Spulen 10 schaltet, sind mehrere Kommutierungseinrichtungen 16 erforderlich.

Wenn die beiden Teilbereiche 4, 6 entsprechend dem gezeichneten Zustand gegeneinander verdreht sind, ist die im Teilbereich 6 induzierte EMK zeitlich gegenüber der im Teilbereich 4 induzierten EMK versetzt. Aufgrund der Reihenschaltung von axial einander zugeordneten Spulen 10 findet zu jedem Zeitpunkt eine vorzeichenberücksichtigende Addition der beiden Teil-EMK statt. Die Spitzenwerte der Gesamt-EMK sind kleiner als die Summe der EMK der beiden Teilbereiche 4, 6 im Nullzustand.

Wenn der Teilbereich 6 um eine volle Pollänge am Umfang in einer Richtung verdreht wird, wird kein Drehmoment und keine EMK erzeugt.

In Fig. 2 ist die Möglichkeit dargestellt, die mechanische Verdrehung der Teilbereiche 4, 6 durch eine rein elektrische, einstellbare Phasenverschiebung zu ersetzen. Axial einander zugeordnete Spulen 10 des Induktionsteils 2 sind durch ein einstellbares LC-Glied miteinander verschaltet.

Die Ausführungsform gemäß Fig. 3 unterscheidet sich von der Ausführungsform gemäß Fig. 1 dadurch, daß das Induktionsteil nicht in zwei axial nebeneinanderliegende Teilbereiche 4, 6 unterteilt ist, sondern - in Umfangsrichtung miteinander abwechselnd - feststehende Teilbereiche 4 und relativ zu diesen um die Achse 12 verdrehbare, gepunktet dargestellte Teilbereiche 6, vgl. Pfeil 14. Die Spule(n) 10 des jeweiligen, verdrehbaren Teilbereichs 6 ist (sind) mit der Spule bzw. den Spulen eines zugeordneten, feststehenden Teilbereichs 4 in Reihe geschaltet, der bei unverdrehten Teilbereichen 6 eine analoge Relativstellung zum nicht eingezeichneten, konzentrisch umgebenden, rotierenden Erregerteil 22 hat. Die Auswirkungen der Verstellung sind im Prinzip analog den weiter vorn geschilderten.

Bei der Ausführungsform gemäß Fig. 4 weist das gezeichnete Induktionsteil 2 einen Polkopfring 32 auf, der koaxial um die Achse 12 relativ zu dem restlichen Induktionsteil 2 verdrehbar ist. Beim Induktionsteil 2 sind Eisenkerne 34 der Spulen 10 gezeichnet, die eigentlichen Spulen 10 jedoch aus Übersichtlichkeitsgründen weggelassen. Der Polkopfring 32 besteht - in Umfangsrichtung abwechselnd - aus gepunktet dargestellten Eisenbereichen 36 und magnetisch nichtleitenden Bereichen 38, beispielsweise aus faserverstärktem Kunststoff. In Fig. 4 ist die Nullstellung gezeichnet, bei der bei jedem Pol 8 ein Eisenbereich 36 symmetrisch radial außen auf einem Spulenkern 34 sitzt. Bei Verdrehung der Polkopfrings 32 aus der gezeichneten Nullstellung verschlechtern sich die Flußbedingungen für den dauermagnetischen Fluß in den Spulenkernen 34, der aus Magnetflußkreisen vom konzentrisch umgebenden, nicht eingezeichneten Erregerteil 22 durch zwei Spulenkerne 34 und zurück zum Erregerteil 22 fließt. Besonders stark verschlechtern sich die Flußbedingungen, wenn die Stirnflächen der Spulenkerne 34 nicht mehr vollständig von Eisenbereichen 36 abgedeckt sind oder wenn diese Stirnbereiche sogar nur noch von den magnetisch nichtleitenden Bereichen 38 abgedeckt sind.

Bei der Ausführungsform gemäß Fig. 5 ist dem jeweils durch den Rückschlußring 42 verlaufenden Rückschlußweg zwischen zwei in Umfangsrichtung benachbarten, gepunktet dargestellten Dauermagneten 30 eine Hilfswicklungsspule 48 zugeordnet. Mittels der betreffenden Hilfswicklungsspule 48 läßt sich der Magnetfluß in dem betreffenden Magnetkreis abschwächen oder verstärken, je nach dem ob dem von den Dauermagneten 30 stammenden Fluß ein positiver oder ein negativer Elektromagnetfluß überlagert wird.

Die Ausführungsform gemäß Fig. 6 weist Stromleiter 50 in den Abstandsräumen zwischen den in Umfangsrichtung beabstandeten, gepunktet dargestellten Dauermagneten 30 auf. Die Stromleiter 50 lassen sich stoßweise mit derart hohen Strömen beaufschlagen, daß die Dauermagnete 30 stärker aufmagnetisiert oder teilweise entmagnetisiert werden.

Es versteht sich, daß die beschriebenen Ausführungsformen alternativ mit stationärem Erregerteil und rotierbarem Induktionsteil gebaut werden können. Es versteht sich ferner, daß alternativ das radial außen gezeichnete und beschriebene Erregerteil auch radial innen sein und von einem radial äußeren Induktionsteil umgeben sein kann. Entsprechende lineare Motoren oder Generatoren sind leicht vorstellbar, wenn man die gezeichneten rotatorischen Ausführungsformen abwickelt.

Bei den gezeichneten und beschriebenen Ausführungsformen wurden die magnetischen Flußbedingungen in der gesamten Maschine im wesentlichen gleichmäßig beeinflußt. Es ist jedoch möglich, Varianten zu bauen, bei denen derartige Beeinflussungen nur bei einem Teil der Magnetkreise vorgenommen werden.

## Patentansprüche

1. Elektrische Maschine mit einem Läufer, der ein dauermagnetisches Erregerteil (22) der Maschine aufweist, und einem Stator, der ein mit Stromleitern (10) ausgestattetes Induktionsteil (2) der Maschine aufweist, wobei der Läufer relativ zu dem Stator bewegbar ist und wobei zur gezielten Veränderung der bei laufender Maschine im Induktionsteil induzierten Spannung durch Einstellung der Phasenlage der in zwei Teilbereichen (4, 6) des Induktionsteils (2) induzierten Spannungen ein erster, mit Stromleitern (10) ausgestatteter Teilbereich (6) des Induktionsteils (2) relativ zu einem zweiten, mit Stromleitern (10) ausgestatteten Teilbereich (4) des Induktionsteils (2) körperlich in Relativbewegungsrichtung von Läufer und Stator verstellbar ist,
dadurch gekennzeichnet,
daß die Maschine eine mittels elektronischer Bauelemente kommutierte, elektrische Maschine ist, bei der ein Sensor (18) zur Erfassung der momentanen Bewegungs-Relativstellung von Läufer und Stator dem zweiten, stationären Teilbereich (4) des Induktionsteils (2) zugeordnet ist (Fig. 1).

2. Maschine nach Anspruch 1,
dadurch gekennzeichnet,
daß die beiden Teilbereiche (4, 6) des Induktionsteils (2) quer zur Relativbewegungsrichtung von Läufer und Stator nebeneinander angeordnet sind.

3. Elektrische Maschine mit einem dauermagnetischen Erregerteil (22) und einem mit Stromleitern (10) ausgestatteten Induktionsteil (2), die relativ zueinander bewegbar sind,
dadurch gekennzeichnet,
daß zur gezielten Veränderung der bei laufender Maschine im Induktionsteil (2) induzierten Spannung durch Einstellung der Phasenlage der in zwei Teilbereichen (4, 6) des Induktionsteils (2) induzierten Spannungen ein elektrischer Phasenschieber zwischen den beiden Teilbereichen (4, 6) des Induktionsteils (2) zwischengeschaltet ist (Fig. 2).

4. Maschine nach Anspruch 3, daß axial einander zugeordnete Spulen (10) des einen Teilbereichs (4) und des anderen Teilbereichs (6) des Induktionsteils (2) über ein einstellbares LC - Glied in Reihe miteinander verschaltet sind.

5. Elektrische Maschine mit einem dauermagnetischen Erregerteil (22) und einem mit Stromleitern (10) ausgestatteten Induktionsteil (2), die in einer Relativbewegungsrichtung relativ zueinander bewegbar sind,
dadurch gekennzeichnet,
daß zur gezielten Veränderung der bei laufender Maschine im Induktionsteil (2) induzierten Spannung durch Einstellung der Größe des effektiven dauermagnetischen Flusses in der Maschine ein dem Erregerteil (22) zugewandter Polkopf-Bestandteil (32) des Induktionsteils (2) relativ zu dem restlichen Induktionsteil körperlich verdrehbar oder - bei Linearmaschinen - in der gegenannten Relativbewegungsrichtung verstellbar ist (Fig. 4).

6. Elektrische Maschine nach Anspruch 5,
dadurch gekennzeichnet,
daß der der Polkopf-Bestandteil (32) des Induktionsteils (2) so weit verdrehbar bzw. verstellbar ist, daß die Stirnflächen des restlichen Induktionsteils von magnetisch nichtleitenden Bereichen (38) abgedeckt sind.

7. Elektrische Maschine mit einem dauermagnetischen Erregerteil (22) und einem mit Stromleitern (10) ausgestatteten Induktionsteil (2), die relativ zueinander bewegbar sind,
dadurch gekennzeichnet,
daß zur gezielten Veränderung der bei laufender Maschine im Induktionsteil (2) induzierten Spannung durch Einstellung der Größe des effektiven dauermagnetischen Flusses in der Maschine Hilfswicklungen (48) am Erregerteil (22) vorgesehen sind, die dem Flußweg zwischen benachbarten Dauermagneten (30) zugeordnet sind, zum Überlagern eines elektrisch induzierten Magnetflusses, um den dauermagnetischen Fluß im Erregerteil (22) abzuschwächen und/oder zu verstärken (Fig. 5).

8. Elektrische Maschine mit einem dauermagnetischen Erregerteil (22) und einem mit Stromleitern (10) ausgestatteten Induktionsteil (2), die relativ zueinander bewegbar sind,
dadurch gekennzeichnet,
daß zur gezielten Veränderung der bei laufender Maschine im Induktionsteil (2) induzierten Spannung durch Einstellung der Größe des effektiven dauermagnetischen Flusses in der Maschine eine Einrichtung zum Erhöhen und/oder Erniedrigen der dauermagnetischen Magnetisierung der Dauermagnete (30) des Erregerteils (2) vorgesehen ist, wobei die Einrichtung Stromleiter (50), Elektromagnete oder Temperaturändezungsmittel zum Aufmagnetisieren oder, gegebenenfalls teilweisen, Entmagnetisieren der Dauermagnete (30) des Erregerteils (22) aufweist (Fig. 6).

9. Maschine nach einem der Ansprüche 3 bis 8,
dadurch gekennzeichnet,
daß sie eine mittels elektronischer Bauelemente kommutierte elektrische Maschine ist.

10. Maschine nach einem der Ansprüche 1 bis 9,
dadurch gekennzeichnet,
daß das Erregerteil (22) mit hochkoerzitiven Dauermagneten (30) aufgebaut ist.

11. Maschine nach einem der Ansprüche 1 bis 10,
dadurch gekennzeichnet,
daß das Erregerteil (22) und das Induktionsteil (2) sich unter Freilassung eines zylindrischen Luftspalts gegenüberliegen.

12. Maschine nach einem der Ansprüche 1 bis 11,
dadurch gekennzeichnet,
daß sie ein Elektromotor ist.

## Claims

1. An electric machine comprising a movable member including a permanent-magnetic excitation part (22) of the machine, and a stator including an induction part (2) of the machine equipped with current conductors (10), in which the movable member is movable relative to the stator and, for purposefully changing the voltage induced in the induction part during operation of the machine, by adjustment of the phase position of the voltages induced in two partial regions (4, 6) of the induction part (2), a first partial region (6) of the induction part (2) equipped with current conductors (10) is physically adjustable relative to a second partial region (4) of the induction part (2) equipped with current conductors (10), in the direction of relative movement of the movable member and the stator, characterized in that the machine is an electric machine commutated by means of electronic components, with a sensor (18) for detecting the instantaneous relative position of the movable member and the stator being associated with the second, stationary partial region (4) of the induction part (2) (Fig. 1).

2. A machine according to claim 1,
characterized in that the two partial regions (4, 6) of the induction part (2) are arranged beside one another transversely to the direction of relative movement of the movable member and the stator.

3. An electric machine comprising a permanent-magnetic excitation part (22) and an induction part (2) equipped with current conductors (10), said parts being movable relative to each other,
characterized in that, for purposefully changing the voltage induced in the induction part (2) during operation of the machine, by adjustment of the phase position of the voltages induced in two partial regions (4, 6) of the induction part (2), an electric phase shifter is interposed between the two partial regions (4, 6) of the induction part (2) (Fig. 2).

4. A machine according to claim 3,
characterized in that mutually axially associated coils (10) of the one partial region (4) and of the other partial region (6) of the induction part (2) are connected in series with each other via an adjustable L.C. member.

5. An electric machine comprising a permanent-magnetic excitation part (22) and an induction part (2) equipped with current conductors (10), said parts being movable relative to each other in a direction of relative movement,
characterized in that, for purposefully changing the voltage induced in the induction part (2) during operation of the machine, by adjustment of the magnitude of the effective permanent-magnetic flux in the machine, a pole head constituent portion (32) of the induction part (2) facing the excitation part (22) is physically rotatable relative to the remainder of the induction part or - in case of linear machines - is adjustable in said direction of relative movement (Fig. 4).

6. An electric machine according to claim 5,
characterized in that the pole head constituent portion (32) of the induction part (2) is rotatable or adjustable, respectively, to such an extent that the face areas of the remainder of the induction part are covered by magnetically non-conducting regions (38).

7. An electric machine comprising a permanent-magnetic excitation part (22) and an induction part (2) equipped with current conductors (10), said parts being movable relative to each other,
characterized in that, for purposefully changing the voltage induced in the induction part (2) during operation of the machine, by adjustment of the magnitude of the effective permanent-magnetic flux in the machine, there are provided auxiliary windings (48) on the excitation part (22) which are associated with the flux path between adjacent permanent magnets (30), for superimposing an electrically induced magnetic flux in order to reduce and/or increase the permanent-magnetic flux in the excitation part (22) (Fig. 5).

8. An electric machine comprising a permanent-magnetic excitation part (22) and an induction part (2) equipped with current conductors (10), said parts being movable relative to each other,
characterized in that, for purposefully changing the voltage induced in the induction part (2) during operation of the machine, by adjustment of the magnitude of the effective permanent-magnetic flux in the machine, there is provided a means for increasing and/or decreasing the permanent-magnetic magnetization of the permanent magnets (30) of the excitation part (2), with said means comprising current conductors (50), electromagnets or temperature changing means for further magnetizing or, possibly partially, demagnetizing the permanent magnets (30) of the excitation part (22) (Fig. 6).

9. A machine according to any one of claims 3 to 8,
characterized in that it is an electric machine commutated by means of electronic components.

10. A machine according to any one of claims 1 to 9,
characterized in that the excitation part (22) is composed with highly coercive permanent magnets (30).

11. A machine according to any one of claims 1 to 10,
characterized in that the excitation part (22) and the induction part (2) are located opposite each other with a cylindrical air gap being left free therebetween.

12. A machine according to any one of claims 1 to 11,
characterized in that it is an electric motor.

## Revendications

1. Machine èlectrique avec un rotor qui comporte un inducteur (22) magnétique permanent, de la machine, et avec un stator qui comporte un induit (2) de la machine, équipé de conducteurs électriques (10), le rotor étant déplaçable par rapport au stator et, pour faire varier de manière contrôlée la tension induite dans l'induit, pendant le fonctionnement de la machine, par réglage de la relation des phases des tensions induites dans deux zones partielles (4, 6) de l'induit (2), une première zone partielle (6), équipée de conducteurs électriques (10), de l'induit (2), étant déplaçable physiquement dans la direction de déplacement relatif du rotor et du stator, par rapport à une seconde zone partielle (4), équipée de conducteurs électriques (10), de l'induit (2), caractérisée en ce que la machine est une machine électrique, commutée au moyen de composants électroniques, dans laquelle un capteur (18) destiné à détecter la position relative momentanée de déplacement du rotor et du stator, est associé à la seconde zone partielle (4) fixe de l'induit (2) (fig. 1).

2. Machine selon la revendication 1, caractérisée en ce que les deux zones partielles (4, 6) de l'induit (2) sont disposées côte à côte transversalement à la direction de déplacement relatif du rotor et du stator.

3. Machine électrique avec un inducteur (22) magnétique permanent et un induit (2) équipé de conducteurs électriques (10), qui sont déplaçables l'un par rapport à l'autre, caractérisée en ce que pour faire varier de manière contrôlée la tension induite dans l'induit (2), lorsque la machine fonctionne, par réglage de la relation des phases des tensions induites dans deux zones partielles (4, 6) de l'induit (2), un déphaseur électrique est inséré entre les deux zones partielles (4, 6) de l'induit (2) (fig. 2).

4. Machine selon la revendication 3, caractérisée en ce que des bobines (10) associées axialement l'une à l'autre d'une zone partielle (4) et de l'autre zone partielle (6) de l'induit (2) sont montées en série entre elles, par l'intermédiaire d'un composant LC réglable.

5. Machine électrique avec un inducteur (22) magnétique permanent et un induit (2) équipé de conducteurs électriques (10), qui sont déplaçables l'un par rapport à l'autre dans une direction de déplacement relatif, caractérisée en ce que pour faire varier de manière contrôlée la tension induite dans l'induit (2), lorsque la machine fonctionne, par réglage de la grandeur du flux magnétique permanent effectif dans la machine, un composant de tête de pôle de l'induit (2), tourné vers l'inducteur (22), peut tourner physiquement par rapport au reste de l'induit ou - dans le cas de machines linéaires - est déplaçable dans la direction de déplacement relatif citée (fig. 4).

6. Machine électrique selon la revendication 5, caractérisée en ce que le composant (32) de l'induit (2) peut tourner et être déplacé suffisamment loin pour que les faces frontales du reste de l'induit soient recouvertes par des zones (38) non conductrices magnétiquement.

7. Machine électrique avec un inducteur (22) magnétique permanent et un induit (2) équipé de conducteurs électriques (10), qui sont déplaçables l'un par rapport à l'autre, caractérisé en ce que pour faire varier de manière contrôlée la tension induite dans l'induit (2), lorsque la machine fonctionne, par réglage de la grandeur du flux magnétique permanent effectif dans la machine, il est prévu sur l'inducteur (22) des enroulements auxiliaires (48) qui sont associés au parcours de flux entre des aimants permanents (30) voisins, pour la superposition d'un flux magnétique induit électriquement, afin d'affaiblir et/ou de renforcer le flux magnétique permanent dans l'inducteur (22) (fig. 5).

8. Machine électrique avec un inducteur (22) magnétique permanente et un induit (2) équipé de conducteurs électriques (10), qui sont déplaçables l'un par rapport à l'autre, caractérisée en ce que pour faire varier de manière contrôlée la tension induite dans l'induit (2), lorsque la machine fonctionne, par réglage de la grandeur du flux magnétique permanent effectif dans la machine, il est prévu un dispositif destiné à accroître et/ou à réduire la magnétisation permanente des aimants permanents (30) de l'inducteur (22), ce dispositif comportant des conducteurs électriques (30), des électro-aimants ou des moyens de variation de la température destinés à magnétiser ou à démagnétiser, le cas échéant en partie, les aimants permanents (30) de l'inducteur (22) (fig. 6).

9. Machine selon l'une des revendications 3 à 8, caractérisée en ce qu'il s'agit d'une machine électrique commutée au moyen de composants électroniques.

10. Machine selon l'une des revendications 1 à 9, caractérisée en ce que l'inducteur (22) est constituée d'aimants permanents (30) hautement coercitifs.

11. Machine selon l'une des revendications 1 à 10, caractérisée en ce que l'inducteur (22) et l'induit (2) se font face en laissant entre eux un entrefer cylindrique.

12. Machine selon l'une des revendications 1 à 11, caractérisée en ce qu'il s'agit d'un moteur électrique.
